Europäisches Patentamt

European Patent Office

Office européen des brevets

(11) Veröffentlichungsnummer: **0 268 199**
**B1**

(12) **EUROPÄISCHE PATENTSCHRIFT**

(45) Veröffentlichungstag der Patentschrift: **23.01.91**

(51) Int. Cl.⁵: **B 29 C 31/08**

(21) Anmeldenummer: **87116651.8**

(22) Anmeldetag: **11.11.87**

(54) **Verfahren zur Herstellung von Formteilen aus Kunststoff zur Durchführung dessen.**

(30) Priorität: **19.11.86 CH 4628/86**

(43) Veröffentlichungstag der Anmeldung:
**25.05.88 Patentblatt 88/21**

(45) Bekanntmachung des Hinweises auf die
Patenterteilung:
**23.01.91 Patentblatt 91/04**

(84) Benannte Vertragsstaaten:
**AT BE CH DE ES FR GB IT LI NL SE**

(56) Entgegenhaltungen:
**EP-A-0 005 961**
**DE-A-1 770 530**
**DE-A-2 225 906**
**DE-A-3 115 306**
**US-A-1 760 234**
**US-A-3 040 381**
**US-A-3 196 485**
**US-A-4 432 716**
**US-A-4 571 320**
**US-A-4 579 514**
**US-A-4 580 964**

(73) Patentinhaber: **BUCHER-GUYER AG**
**Maschinenfabrik**
**CH-8166 Niederweningen/Zürich (CH)**

(72) Erfinder: **Schneeberger, Erich, Ing. HTL**
**Chlupfwiesstrasse 27**
**CH-8165 Oberweningen (CH)**

Courier Press, Leamington Spa, England.

## Beschreibung

Die Erfindung betrifft ein Verfahren zur Herstellung von Formteilen aus Kunststoff durch Pressen, bei dem die Kunststoffmasse nach der Plastifizierung einer Formkavität eines offenen Formwerkzeuges zugeführt wird.

Bei der Herstellung von grossflächigen Teilen aus Kunststoff wird von der eingangs beschriebenen Vorgehensweise Gebrauch gemacht.

Bei einem Verfahren und einer Einrichtung zur Herstellung von Formteilen aus Kunststoff nach der EP-A-0005961 strömt die plastifizierte Masse in eine sich mittels Förderorgan fortbewegende offene Kavität einer Form, in welcher sie sich wie ein Teppich oder als Schicht ausbreitet. Die Dicke der Schicht wird durch die Geschwindigkeit des Förderorgans bestimmt. Nach der Beschickung erfolgt der Weitertransport der Form durch ein weiteres Fördermittel, von dem sie zwischen zwei Stempelplatten einer Presse geschoben wird. Dieses Verfahren und die dazu erforderliche Einrichtung erweisen sich bei der Ausübung aufgrund der langen Transportwege als umständlich und zeitraubend.

Aufgabe der Erfindung ist es deshalb, ein Verfahren der eingangs erwähnten Art zu schaffen, welches die Herstellung grossflächiger Formteile anspruchsvoller Festigkeitswerte unter wirtschaftlichen Bedingungen und vielseitigen Einsatzmöglichkeiten gestattet.

Erfindungsgemäss wird diese Aufgabe dadurch gelöst, dass die für einen Pressvorgang bestimmte Kunststoffmasse auf einer mit der Beschickungsstelle und dem in der Presse angeordneten Formwerkzeug förderwirksam kommunizierenden Fläche in vorbestimmter Anordnungsweise ausgelegt wird.

Dadurch werden das Zuführen oder Einlegen der Kunststoffmasse in die geöffnete Form erleichtert und die an die Festigkeit und Zuverlässigkeit gestellten hohen Anforderungen erheblich verbessert. Das Auslegen der vorgesehenen Masse kann gezielt (gesteuert) unter Anwendung einer wahlweise bestimmten Auslegeordnung erfolgen.

Als Vorrichtung zur Durchführung des Verfahrens eignet sich eine zwischen der als Beschickungsstelle ausgebildeten Austragsöffnung einer Plastifiziereinheit angeordnete und über die Kavität eines Formwerkzeuges verleg- und fördernd antreibbare Fläche, sodass die Kunststoffmasse ohne zusätzliche manuelle Unterstützung nach der Aufbereitung der Formkavität zugeführt werden kann. Selbstverständlich reicht die Bewegung der Fläche wenigstens annähernd von einer Beschickungsstation über die Formkavität bzw. Formkavitäten hinweg.

Gemäss einer günstigen Arbeitsweise kann die Fläche horizontal bzw. in einer im Rahmen der Selbsthemmung zwischen Masse und Fläche erzielbaren Schräglage beweglich ausgebildet sein, wodurch die Regelmässigkeit der ausgelegten Kunststoffmasse begünstigt werden kann.

Bei einer besonderen Anordnungsweise der Kunststoffmasse ist es vorteilhaft, wenn die Fläche um eine horizontale bzw. einer im Rahmen der Selbsthemmung erzielbaren Schräglage versetzbare Achse verschwenkbar ist.

Ebensolche Bedeutung hat die Verdrehbarkeit der Fläche um eine vertikale Achse, wodurch eine unbeschränkte Anordnung der Kunststoffmasse auf der Fläche möglich wird.

Vorzüglich erweist sich die Fläche als Band, wodurch sich eine günstige Antriebskonstruktion bewerkstelligen lässt.

Dazu eignet sich ein um Rollen umlaufend geführtes, vorzugsweise endloses Band, das sich als einfaches Mittel mit geringem Konstruktionsaufwand erweist.

Auch ein von einer Rolle abwickelbares und nach der Verwendung wieder aufwickelbares Band, kann hierzu vorteilhaft benutzt werden.

Bei der Beschickung der Formkavität bzw. Formkavitäten nach dem erfindungsgemässen Verfahren, ist die Zustell- oder Rückzugs- und die Antriebsgeschwindigkeit der mit der in der vorbestimmten Anordnungsweise ausgelegten Kunststoffmasse versehenen Fläche wenigstens annähernd gleich gross ausgebildet.

Die gegenseitige Abhängigkeit der Zustell- oder Rückzugsgeschwindigkeit von der Antriebsgeschwindigkeit der Fläche wird von der festgelegten Anordnungsweise der Kunststoffmasse auf dieser Fläche und jener in der Formkavität bestimmt.

Es ist durchaus möglich, den Antrieb der Fläche und die Zustell- bzw. Rückzugsbewegung mit unterschiedlichen Geschwindigkeiten vorzunehmen, wobei diese Abweichung weitestgehend der sich zwischen der Auslegeanordnung der Kunststoffmasse auf der Fläche und derjenigen in der Formkavität bildenden Differenz proportional entspricht. Gleiche Anordnungsverhältnisse auf der Fläche und in der Formkavität zwingen nicht zur Aenderung der Geschwindigkeit; es kann jedoch mittels unterschiedlicher Geschwindigkeiten die Anordnung der ausgetragenen Kunststoffmasse in der Formkavität geändert werden, d.h. bei höherer Antriebsgeschwindigkeit der Fläche gegenüber der Zustell- oder Rückzugsgeschwindigkeit kann der Formkavität eine pro Zeiteinheit grössere Menge der Kunststoffmasse zugeführt bzw. bei niedrigerer Antriebsgeschwindigkeit der Fläche eine geringere Menge der Kunststoffmasse zugeführt werden.

Wie schon erwähnt, kann die auf der Fläche ein- oder mehrteilig ausgebreitete Kunststoffmasse zweckmässigerweise sowohl mit der Zustell- als auch mit der Rückzugsbewegung der Formkavität zugeführt werden.

Zur Vermeidung einer unerwünschten Haftung der Kunststoffmasse, vornehmlich von Duroplasten, auf der Fläche bzw. dem Band, werden letztere vorzugsweise gekühlt, wodurch die Verzögerung der Aushärtung begünstigt wird.

Alternativ kann gegen die Haftung der Kunststoffmasse an der Fläche bzw. dem Band, eine quer zur Bewegungsrichtung sich erstreckende Abstreifvorrichtung vorgesehen werden.

Zur Kontrolle der Menge der zuzuführenden Kunststoffmasse kann die Fläche mit einer Waage versehen oder an eine solche angeschlossen sein.

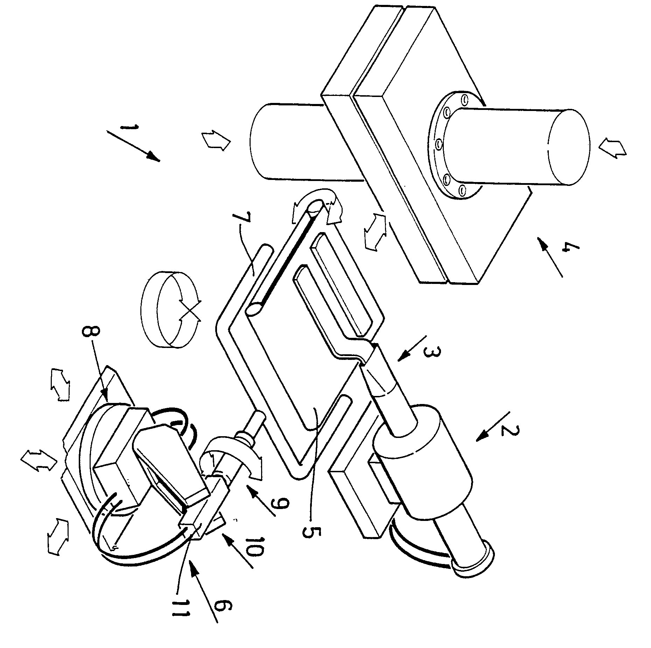

Weitere Einzelheiten und Vorteile der Erfindung ergeben sich aus der Beschreibung und der Zeichnung, die ein Ausführungsbeispiel darstellt. Die einzige Figur zeigt eine isometrische Darstellung einer zwischen der Plastifiziereinrichtung einer Kunststoffverarbeitungsmaschine angeordneten Beschickungseinrichtung.

In der einzigen Figur ist eine im Rahmen des Erfindungsgedankens ausgeführte Beschickungseinrichtung 1 einer Kunststoffverarbeitungsmaschine dargestellt. Die aus der plastifizierungseinheit 2 über eine Schlitzdüse 3 breit strömende Kunststoffmasse, beispielsweise mit Füllstoffen und/oder Verstärkungsfasern angereichertes polyesterharz, wird vor dem Verpressen in einer mit 4 bezeichneten Formpresse auf einer als endloses Band 5 ausgebildeten Fläche ausgelegt. Die Einstellung der Lage dieses um Rollen umlaufenden Bandes 5 erfolgt über eine roboterähnliche Antriebseinheit 6, die mit einem Steuergerät (nicht ersichtlich) verbunden ist. Ein gabelähnliches Gestell 7 verbindet Band 5 und die Antriebseinheit 6, die in vertikaler und in horizontalen Richtungen verstellund feststellbar ist. Durch einen Drehantrieb 8 ist das Band 5 verschwenkbar ausgebildet und es kann auch durch weitere auf das Gestell 7 einwirkende Antriebe 9, 10 in allen Richtungen geneigt werden. Die Zustell- und Rückzugsbewegung erfolgt durch einen hydraulisch oder pneumatisch betätigbaren Zylinder 11. Selbstverständlich könnte die Antriebseinheit 6 auch unter dem antreibbaren Band 5 bzw. der antreibbaren Fläche positioniert werden; eine Möglichkeit, die aufgrund der zur Verfügung stehenden Mittel vom Fachmann keine besondere Leistung abverlangt.

Nachdem oder während die bestimmte Menge der Kunststoffmasse auf dem Band 5 bzw. der Fläche ausgelegt worden ist bzw. wird, kann die Beschickung der offenen Form erfolgenDabei sind insbesondere zeitraubende Wege zu vermeiden, indem die Fläche bzw. das Band 5 den jeweils herrschenden Verhältnissen angepasst wird. Die für die Beschickung einer Formkavität erforderliche Menge kann beispielsweise auf einem bis an die Form hin reichenden Band 5 ausgelegt werden und anschliessend mit Hilfe der Zustellbewegung und der geschwindigkeitsgleichen Bandbewegung zugeführt werden. Als besonders rationell erweist es sich, wenn die Beschickung der Formkavität während dem Auslegen der Kunststoffmasse auf der antreibbaren Fläche geschieht.

Die Kunststoffmasse wird über eine Schlitzdüse 3, die sich dafür besonders eignet, breitflächig ausgetragen und nach der vorgeschriebenen Anordnungsweise auf der entsprechend gesteuerten Fläche ausgelegt.

## Patentansprüche

1. Verfahren zur Herstellung von Formteilen aus Kunststoff durch Pressen, bei dem die Kunststoffmasse nach der Plastifizierung einer Formkavität eines offenen Formwerkzeuges zugeführt wird, dadurch gekennzeichnet, dass die für einen Pressvorgang bestimmte Kunststoffmasse auf einer mit der Beschickungsstelle und dem in der Presse angeordneten Formwerkzeug förderwirksam kommunizierenden Fläche in vorbestimmter Anordnungsweise ausgelegt wird.

2. Vorrichtung zur Durchführung des Verfahrens nach Patentanspruch 1, dadurch gekennzeichnet, dass zwischen der als Beschickungsstelle ausgebildeten Austragsöffnung einer Plastifiziereinheit und über die Kavität eines Formwerkzeuges eine verleg- und fördernd antreibbare Fläche angeordnet ist.

3. Vorrichtung nach einem der Ansprüche 1 und 2, dadurch gekennzeichnet, dass die Fläche wenigstens annähernd horizontal beweglich ausgebildet ist.

4. Vorrichtung nach einem der Ansprüche 1 und 2, dadurch gekennzeichnet, dass die Fläche um wenigstens annähernd horizontale Achsen verschwenkbar ausgebildet ist.

5. Vorrichtung nach einem der Ansprüche 1 und 2, dadurch gekennzeichnet, dass die Fläche um eine vertikale Achse drehbar ausgebildet ist.

6. Vorrichtung nach einem der Ansprüche 1 bis 5, dadurch gekennzeichnet, dass die Fläche als Band (5) ausgebildet ist.

7. Vorrichtung nach Anspruch 6, dadurch gekennzeichnet, dass das Band (5) endlos ausgebildet ist.

8. Vorrichtung nach Anspruch 6 oder 7, dadurch gekennzeichnet, dass das Band (5) um Rollen laufend angeordnet ist.

9. Vorrichtung nach einem der Ansprüche 2 bis 8, dadurch gekennzeichnet, dass die Antriebs- und Zustell- oder Rückzugsgeschwindigkeit der Fläche in Abhängigkeit der Abweichung zwischen der Auslegeanordnung der Kunststoffmasse auf der Fläche und derjenigen in der Formkavität steuerbar ist.

10. Vorrichtung nach einem der Ansprüche 2 bis 8, dadurch gekennzeichnet, dass die Antriebs- und Zustell- oder Rückzugsgeschwindigkeit der Fläche gegenseitig unabhängig steuerbar sind.

11. Vorrichtung nach einem der Ansprüche 1 bis 10, dadurch gekennzeichnet, dass die Fläche kühlbar ausgebildet ist.

12. Vorrichtung nach einem der Ansprüche 1 bis 11, dadurch gekennzeichnet, dass quer zur Bewegungsrichtung der Fläche eine Abstreifvorrichtung angeordnet ist.

13. Vorrichtung nach einem der Ansprüche 1 bis 12, dadurch gekennzeichnet, dass die Fläche als Waage ausgebildet oder mit einer solchen verbunden ist.

## Revendications

1. Procédé de fabrication de pièces façonnées en matière plastique, par moulage sous pression, dans lequel la masse de matière plastique est amenée après plastification à une cavité de moulage d'un outil de moulage ouvert, caractérisé en ce que la masse de matière plastique déterminée pour un processus de moulage sous pression est placée, selon un mode de disposition prédéterminée, sur une surface communiquant fonctionnellement, lors d'un transfert, avec le point de chargement et avec l'outil de moulage disposé dans la presse.

2. Dispositif de réalisation du procédé selon la revendication 1, caractérisé en ce qu'un surface de pose et susceptible d'être entraînée dans un transfert est disposée entre l'ouverture de déversement, réalisée sous forme de point de chargement, d'une unité de plastification et le dessus de la cavité d'un outil de moulage.

3. Dispositif de réalisation du procédé selon l'une des revendications 1 et 2, caractérisé en ce que la surface est mobile, au moins à peu près horizontalement.

4. Dispositif de réalisation du procédé selon l'une des revendications 1 et 2, caractérisé en ce que la surface est pivotante, autour d'axes au moins à peu près horizontaux.

5. Dispositif de réalisation du procédé selon l'une des revendications 1 et 2, caractérisé en ce que la surface est tournante, autour d'un axe vertical.

6. Dispositif de réalisation du procédé selon l'une des revendications 1 à 5, caractérisé en ce que la surface est réalisée sous forme de bande (5).

7. Dispositif de réalisation du procédé selon la revendication 6, caractérisé en ce que la bande (5) est une bande sans fin.

8. Dispositif de réalisation du procédé selon la revendication 6 ou 7, caractérisé en ce que la bande (5) se déplace autour de rouleaux.

9. Dispositif de réalisation du procédé selon l'une des revendications 2 à 8, caractérisé en ce que les vitesses d'entraînement et d'accostage ou de retrait de la surface peuvent être commandées en fonction de la distance entre le dispositif de mise en place de la masse de matière plastique sur la surface et le dispositif de pose dans la cavité du moule.

10. Dispositif de réalisation du procédé selon l'une des revendications 2 à 8, caractérisé en ce que les vitesses d'entraînement et d'accostage ou de retrait de la surface peuvent être commandées indépendamment les unes des autres.

11. Dispositif de réalisation du procédé selon l'une des revendications 1 à 10, caractérisé en ce que la surface peut être refroidie.

12. Dispositif de réalisation du procédé selon l'une des revendications 1 à 11, caractérisé en ce qu'un dispositif de raclage est disposé transversalement par rapport à la direction de déplacement de la surface.

13. Dispositif de réalisation du procédé selon l'une des revendications 1 à 12, caractérisé en ce que la surface est réalisée sous forme de balance ou bien est reliée à une balance.

## Claims

1. A method of producing moulded parts from plastics material by compression moulding wherein the plastics material is fed, after being plasticized, to a mould cavity of an open mould, characterised in that the plastics material intended for a compression moulding operation is laid out in a predetermined arrangement on a surface in effective conveying communication with the feed point and with the mould disposed in the press.

2. An apparatus for carrying out the method according to Claim 1, characterised in that disposed between the discharge opening of a plasticizing unit, which opening is constructed in the form of a feed point, and above the cavity of a mould is a displaceable surface which can be driven with a conveying action.

3. An apparatus according to either one of Claims 1 and 2, characterised in that the surface is adapted for movement at least substantially horizontally.

4. An apparatus according to either one of Claims 1 and 2, characterised in that the surface is adapted for pivoting about at least substantially horizontal axes.

5. An apparatus according to either one of Claims 1 and 2, characterised in that the surface is adapted for rotation about a vertical axis.

6. An apparatus according to any one of Claims 1 to 5, characterised in that the surface is constructed in the form of a belt (5).

7. An apparatus according to Claim 6, characterised in that the belt (5) is made endless.

8. An apparatus according to Claim 6 or 7, characterised in that the belt (5) is adapted to run round rollers.

9. An apparatus according to any one of Claims 2 to 8, characterised in that the speed of driving, and infeed or withdrawal of the surface can be controlled depending on the difference between the arrangement in which the plastics material is laid out on the surface and that in the mould cavity.

10. An apparatus according to any one of Claims 2 to 8, characterised in that the speed of driving and of infeed or withdrawal of the surface can be controlled with mutual independence.

11. An apparatus according to any one of Claims 1 to 10, characterised in that the surface is constructed so that it can be cooled.

12. An apparatus according to any one of Claims 1 to 11, characterised in that a doctor device is arranged transversely to the direction of movement of the surface.

13. An apparatus according to any one of Claims 1 to 12, characterised in that the surface is constructed in the form of a balance or is connected to one.

EP 0 268 199 B1

1